Europäisches Patentamt

European Patent Office

Office européen des brevets

(11) Publication number: **0 118 028**
**B1**

(12) **EUROPEAN PATENT SPECIFICATION**

(45) Date of publication of patent specification: **04.05.88**

(21) Application number: **84101025.9**

(22) Date of filing: **08.03.82**

(60) Publication number of the earlier application in accordance with Art. 76 EPC: **0 073 836**

(51) Int. Cl.⁴: **F 24 J 2/42,** F 24 D 11/00, A 01 G 9/24

(54) Solar heat accumulating greenhouses.

(30) Priority: **24.08.81 JP 133165/81**

(43) Date of publication of application:
**12.09.84 Bulletin 84/37**

(45) Publication of the grant of the patent:
**04.05.88 Bulletin 88/18**

(84) Designated Contracting States:
**DE FR GB NL SE**

(56) References cited:
**EP-A-0 012 996
DE-A-2 635 423
DE-A-2 924 653
FR-A-2 404 817
FR-A-2 476 806
US-A-4 114 600**

(73) Proprietor: **KUBOTA LTD.
2-47, Shikitsuhigashi 1-chome
Naniwa-ku Osaka 556 (JP)**

(72) Inventor: **Yano, Naomichi
Kubota Ltd. 2-47, Shikitsuhigashi 1-chome
Naniwa-ku Osaka-shi Osaka 556 (JP)**
Inventor: **Ito, Hajime
Kubota Ltd. 2-47 Shikitsuhigashi 1-chome
Naniwa-ku Osaka-shi Osaka 556 (JP)**
Inventor: **Tanaka, Shigeru
Kubota Ltd. 2-47, Shikitsuhigashi 1-chome
Naniwa-ku Osaka-shi Osaka 556 (JP)**

(74) Representative: **MacFarlane, John Anthony
Christopher et al
HASELTINE LAKE & CO. Hazlitt House 28,
Southampton Buildings Chancery Lane
London WC2A 1AT (GB)**

Courier Press, Leamington Spa, England.

## Description

This invention relates to solar heat accumulating greenhouses.

Conventionally, in greenhouses such as shown in JP—A—54—91444, double roofs constructed with two glass panes, solar heat receiving panels arranged in the double roofs, a water storage tank storing hot water from the panels and an air conditioner using the hot water from the tank are provided. In another example as shown in JP—U—55—56570, a heat collector and a heat accumulating tank connected to the heat collector via a fan are provided. The former has the disadvantage that the double roof is necessary for arranging panels having wide heat receiving area near the roof of the greenhouse, and is thus costly to manufacture. In both of them only the air in the greenhouse is warmed, not the soil itself directly.

EP—A—0 012 996 discloses a solar heat accumulating greenhouse (1, 3, 4) having a heat accumulating tank (9) which absorbs solar heat and accumulates or "radiates" it in accordance with temperature changes to regulate the temperature of the greenhouse. A heat exchanger (7) is provided in an upper portion in the greenhouse and the heat accumulating tank (9) is disposed at a lower part in the greenhouse. The heat exchanger (7) and the heat accumulating tank (9) are interconnected by a forced circulation liquid system (10). A passage (1) is defined by inner and outer walls (3) and (4) on the roof of the building, so that air may be guided from the side of the building through the passage (1) to the uppermost central portion of the roof and further may be blown from a manifold (5) into the space of a major volume of air defined by the inner wall. The heat exchanger (7) is provided at the outlet of the air from the manifold (5) which is carried through the passage (1). However, it is very doubtful how much the air is heated while the air travels through the passage (1) from the side toward the uppermost portion of the passage when the air is forced to be blown from the manifold by the blower. In addition, provision of the inner and outer walls (3) and (4) on the roof reduces transfer of the solar radiation through the roof inside the building. Even if the solar radiation is introduced inside the building, the heated air which is about to come through by convection to the uppermost portion of the space in the vicinity of the heat exchanger (7) is dispersed by the flow of the air of the manifold before the heated air comes in contact with the heat exchanger, whereby heat exchange between the heated air coming upward by convection inside the building and the heat transfer fluid medium in the system (10) is reduced.

FR—A—2 476 806 discloses a heat accumulating tank that is a heat insulating member in which cylindrical containers enclosing phase transformation heat accumulating medium therein are incorporated. In this tank there is a flow passage. A heat collecting return pipe from a radiator heat collecting portion is connected to an upper portion at an upstream side of this flow passage and a heat collecting supply pipe for the radiator heat collecting portion is coupled to a lower portion at a downstream side of this flow passage.

According to the present invention there is provided a solar heat accumulating greenhouse having a heat accumulating tank which absorbs solar heat and accumulates or radiates it in accordance with temperature change to regulate the temperature of the greenhouse, in which:

a radiator heat exchanging portion is provided at least at one side of an upper or lower portion in the greenhouse;

the heat accumulating tank is disposed at a lower part in the greenhouse; and

the radiator heat exchanging portion and the heat accumulating tank are connected to each other through a forced circulation liquid system;

characterised in that:

the heat accumulating tank is a heat insulating member in which cylindrical containers enclosing phase transformation heat accumulating medium therein are incorporated;

in the tank there is formed a flow passage;

a heat collecting return pipe from a radiator heat collecting portion is connected to an upper portion at an upstream side of said flow passage;

a heat collecting supply pipe for the radiator heat collecting portion is coupled to a lower portion at a downstream side of said flow passage;

the heat accumulating tank is a flat rectangular prism long in longitudinal direction;

the interior of the tank is divided into a plurality of sections at its intermediate portion along long sides thereof in the horizontal direction, by a plurality of vertical partition plates;

the cylindrical containers are arranged along the direction of the long sides of the tank, to extend through the partition plates, in horizontal layers with the containers in any one layer in staggered relationship to the containers in the or each layer that is above and/or below the one layer;

the partition plates are each divided into upper and lower sections holding the cylindrical containers therebetween; and

respective sections of the tank are in communication with each other through communicating pipes which are open towards the lower portions of the upstream side tank sections through the partition walls, and which are also open towards the upper portions of the downstream side tank sections.

For a better understanding of the invention and to show how the same may be carried into effect, reference will now be made, by way of example, to the accompanying drawings, in which:—

Figure 1 is a schematic layout diagram showing a solar heat accumulating greenhouse,

Figure 2 is a top plan view, partly broken away, of a heat accumulating tank,

Figure 3 is a front view, partly broken away, of a heat accumulating tank, and

Figure 4 is a cross section taken along the line IV—IV in Figure 3.

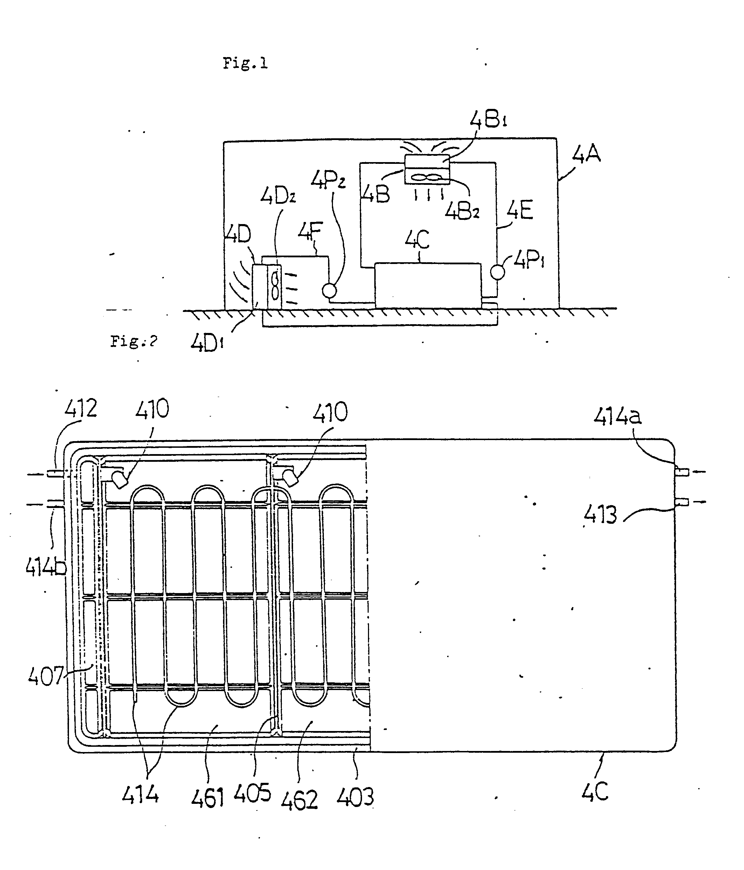

In Figure 1, generally at the central upper portion of the greenhouse 4A, there is provided a radiator heat collecting portion 4B which includes a radiator 4B$_1$ provided with fins around a water passing pipe and having an air lead-in port directed upward, and a fan 4B$_2$ disposed below the radiator 4B$_1$. There is also provided a radiator heat radiating section 4D having a construction similar to that of the radiator heat collecting portion 4B, and disposed with an air lead-in portion of a radiator 4D$_1$ directed towards the side wall of the greenhouse, and a fan 4D$_2$ directed towards the interior of the greenhouse.

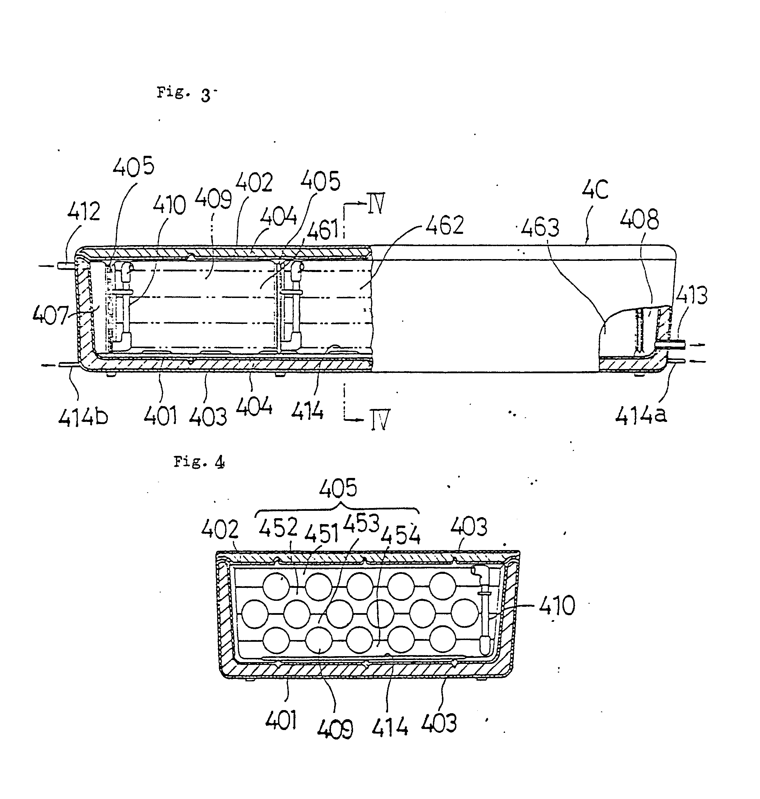

Further provided is a heat accumulating tank 4C which is a latent heat accumulating tank. As shown in Figures 2 through 4, the tank 4C is a flat rectangular prism long in longitudinal direction, and includes a container 401 of a synthetic resin (referred to as a tank body hereinbelow) covered by a heat insulating material 404 such as expanded polystyrene or the like, a tank body cover 403 made of a corrosion-resistance metal and further applied over the outer periphery of the tank body 401 covered with the heat insulating material 404, and a plurality of cylindrical containers 409 arranged in parallel relation to each other in horizontal layers and incorporated in the tank body 401. In the cylindrical containers 409, a phase transformation heat accumulating medium which produces exothermic and endothermic reactions through temperature radiations is enclosed, while water is filled in the tank body 401 so as to be formed into streams. The interior of the tank body 401 is divided, for example, into a plurality of sections 461, 462 and 463 at its intermediate portion along long sides thereof in the horizontal direction, by a plurality of vertical partition plates 405. At the upstream side and downstream side along the water streams for these sections, the uppermost stream section 407 and the lowermost stream section 408 are formed. The cylindrical containers 409 are arranged along the direction of the long sides of the tank body 401 and extend through the partition plates 405. The containers 409 in any one layer are in staggered relationship to the containers 409 in the or each layer that is immediately above and/or below the one layer. The partition plates 405 are each divided into upper and lower four plate sections 451, 452, 453 and 454 holding the cylindrical containers 409 therebetween. The respective tank sections 461, 462 and 463 are in communication with each other through communicating pipes 410 which are open towards the lower portions of the upstream side tank sections through the partition walls 405, and also open towards the upper portions of the downstream side tank sections so as to form flow passages for producing uniform streams in the respective tank sections. To the uppermost stream section 407 there is connected at its upper part a heat collecting return pipe 412 from the radiator heat collecting section 4B. A heat radiating supply pipe 414b to the radiator heat radiating section 4D is connected at its lower portion. To the lowermost stream side section 408 are connected a heat collecting supply pipe 413 towards the radiator

heat collecting section 4B and a heat radiating return pipe 414a from the radiator heat radiating section 4D.

In each of the cylindrical containers 409, hydrated compound which produces exothermic and endothermic reactions by temperature variations, for example, $CaCl_2.6H_2O$ is enclosed. When the temperature within the heat accumulating tank is raised by the hot water introduced from the radiator heat collecting section 4B and reaches over 38°C, $CaCl_2.6H_2O$ becomes $CaCl_2 + 6H_2O$ to produce endothermic reaction for heat accumulation. Subsequently, upon falling of the water temperature below 38°C, $CaCl_2$ and water component are subjected to chemical combination to produce exothermic reaction, thereby to suppress lowering of water temperature within the tank. At the bottom portion within the tank 4C, a heat exchanging pipe 414 made of a good heat conducting metal is disposed in a zig-zag manner so as to extend through each of the tank sections, with the opposite ends thereof being respectively connected to the return pipe 414a and the supply pipe 414b. Water to be heated is passed through the heat exchanging pipe 414.

A heat collecting forced circulation water system 4E is connected to the heat collecting return pipe 412 and heat collecting supply pipe 413 through the radiator heat collecting section 4B, and is provided with a circulating pump 4P$_1$ at the supply pipe side.

A heat radiating force circulation water supply 4F is connected to the heat radiating return pipe 414a and supply pipe 414b through the radiator heat collecting section 4D, and in the course at the side of the supply pipe 414b, a circulating pump 4P$_2$ is connected. Part of the water pipe for the heat radiating force circulation water system 4F is buried in the ground within the greenhouse.

In the heat accumulating greenhouse 4A having the construction as described above, operation is as follows.

As shown in Figure 1, during day time with the sun shining, air within the greenhouse 4A is heated by the solar heat, and the air thus heated is drawn by the fan 4B$_2$ of the radiator heat collecting section 4B to warm up the radiator 4B$_1$ for heating water within the heat collecting forced circulating water system 4E. The water thus heated is fed to the heat collecting tank 4C for heat accumulation by the phase transformation heat accumulating medium in the cylindrical containers 409 within the tank 4C. Since the radiator heat collecting section 4B is positioned at the upper central portion where the room temperature is the highest, it has a high heat collecting efficiency.

Meanwhile, during night time or rainy weather, when the temperature within the greenhouse falls following lowering of the external atmospheric temperature, heat is discharged into the greenhouse by heat from the heat accumulating rank 4C, contrary to the above case, for heating. The radiation of heat as described above is mainly effected by the radiator heat radiating section 4D, but it may be so modified as to effect the heat radiating function by supplementarily employing the radiator heat collecting portion 4B at the same time.

Owing to the fact that the radiator heat radiating portion 4D has a high heat radiating efficiency, since it is disposed at the lower portion of the greenhouse for diffusing warm air towards the central portion, and also that part of the water piping for the heat radiation forced circulating water system 4F is buried in the ground, the ground surface and the interior of the greenhouse are heated also from underground.

The heat collecting side circulating pump $4P_1$ and heat collecting section fan $4B_2$ or heat radiating side circulating pump $4P_2$ and heat radiating section fan $4D_2$ are respectively arranged to be automatically started or stopped as in sets by the functioning of a thermostat provided within the greenhouse.

Upon falling of water temperature within the heat accumulating tank 4 below 38°C due to heat radiation, the phase transformation heat accumulating medium in the cylindrical containers 409 causes exothermic reaction so as to prevent water temperature from falling further. The heat accumulating tank is capable of maintaining the temperature within the tank above the set value at all times, and has such effects that it is provided with a large thermal capacity, and can be made compact in size.

For the phase transformation heat accumulating substance, $Na_2SO_4 \cdot 10H_2O$, $Na_2SO_3 \cdot 5H_2O$, and paraffin, for example, may be employed besides the substances described earlier. Moreover, in the heat collecting and heat radiating forced circulating fluid system referred to previously, antifreezing solution such as ethylene glycol, or fluids such as air, maybe employed instead of water. Furthermore, in the heat accumulating tank 4C, spherical containers or containers of any other shapes may be accommodated instead of the cylindrical containers 409.

It is also to be noted that the heat radiating section 4D may be omitted so as to effect the heat radiating function by the heat collecting section 4B, and that, with the heat collecting section 4B abbreviated, warm air at the ceiling portion is led to the heat radiating section 4D through a duct for effecting the heat collecting function also thereat.

**Claim**

A solar heat accumulating greenhouse having a heat accumulating tank (4C) which absorbs solar heat and accumulates or radiates it in accordance with temperature change to regulate the temperature of the greenhouse, in which:

a radiator heat exchanging portion (4B or 4D) is provided at least at one side of an upper or lower portion in the greenhouse;

the heat accumulating tank (4C) is disposed at a lower part in the greenhouse; and

the radiator heat exchanging portion (4B or 4D) and the heat accumulating tank (4C) are connected to each other through a forced circulation liquid system (4E, 4F);

characterised in that:

the heat accumulating tank (4C) is a heat insulating member in which cylindrical containers (409) enclosing phase transformation heat accumulating medium therein are incorporated;

in the tank (4C) there is formed a flow passage;

a heat collecting return pipe (412) from a radiator heat collecting portion (4B) is connected to an upper portion at an upstream side of said flow passage;

a heat collecting supply pipe (413) for the radiator heat collecting portion (4B) is coupled to a lower portion at a downstream side of said flow passage;

the heat accumulating tank (4C) is a flat rectangular prism long in longitudinal direction;

the interior of the tank (4C) is divided into a plurality of sections at its intermediate portion along long sides thereof in the horizontal direction, by a plurality of vertical partition plates (405);

the cylindrical containers (409) are arranged along the direction of the long sides of the tank (4C), to extend through the partition plates (405), in horizontal layers with the containers in any one layer in staggered relationship with the containers in the or each layer that is above and/or below the one layer;

the partition plates (405) are each divided into upper and lower sections holding the cylindrical containers (409) therebetween; and

respective sections of the tank (4C) are in communication with each other through communicating pipes (410) which are open towards the lower portions of the upstream side tank sections through the partition walls (405), and which are also open towards the upper portions of the downstream side tank sections.

**Patentanspruch**

Mit Speicherung von Solarwärme arbeitendes Gewächshaus mit einem Wärmespeichertank (4C), der Solarwärme absorbiert und sie nach Maßgabe der Temperaturänderung speichert oder abstraht, um die Temperatur des Gewächshauses zu regeln, wobei

im unteren und/oder oberen Bereich des Gewächshauses eine Radiatorwärmetauschereinrichtung (4B oder 4D) angeordnet ist,

der Wärmespeichertank (4C) in einem unteren Teil des Gewächshauses angeordnet ist und

die Radiatorwärmetauschereinrichtung (4B oder 4D) und der Wärmespeichertank (4C) durch ein Flüssigkeitssystem (4E, 4F) mit Zwangszirkulation miteinander verbunden sind,

dadurch gekennzeichnet,

daß der Wärmespeichertank (4C) eine wärmeisolierende Einheit ist, in der sich zylindrische Behälter (409) befindet, die ein mit Phasentransformation arbeitendes Wärmespeichermedium enthalten,

daß in dem Wärmespeichertank (4C) ein Strömungsdurchgang ausgebildet ist,

daß eine Wärmesammlerrückführungsleitung (412) von einer Radiatorwärmesammeleinrichtung (4B) mit einem oberen Anschnitt des genannten Strömungsdurchgangs an dessen stromaufwärtiger Seite verbunden ist,

daß eine Wärmesammlerzuführungsleitung (413) für die Radiatorwärmesammeleinrichtung (4B) mit einem unteren Abschnitt an der stromabwärtigen Seite des Strömungsdurchgangs verbunden ist,

daß der Wärmespeichertank (4C) ein flaches, in Längsrichtung ausgedehntes rechteckiges Prisma ist,

daß das Innere des Wärmespeichertanks (4C) in seinem mittleren Bereich längs der Langseiten in horizontaler Richtung durch eine Vielzahl von vertikalen Trennwandungsplatten (405) in eine Vielzahl von Abschnitten unterteilt ist,

daß die zylindrischen Behälter (409) in horizontalen Lagen in Richtung der Längsseite des Wärmespeichertanks (4C) angeordnet sind und durch die Trennwandungsplatten (405) verlaufen, wobei die Behälter in irgendeiner der genannten Lagen gegenüber den Behältern in der oder jeder darüber oder darunter liegenden Lage versetzt sind,

daß die Trennwandungsplatten (405) jeweils in obere und untere Abschnitte unterteilt sind, die die zylindrischen Behälter (409) zwischen sich halten,

und daß die einzelnen Abschnitte des Wärmespeichertanks (4C) durch Leitungen (410) miteinander in Verbindung stehen, die in Richtung auf die unteren Bereiche der stromaufwärtigen Tankabschnitte durch die Trennwandungsplatten (405) offen sind und ebenfalls in Richtung auf die oberen Bereiche der stromabwärtigen Tankabschnitte offen sind.

**Revendication**

Serre à accumulation de chaleur solaire comportant un réservoir (4C) d'accumulation de chaleur qui absorbe la chaleur solaire et l'accumule ou la diffuse selon les changements de température, en vue de réguler la température de la serre, dans laquelle:

une partie (EB ou ED) d'échange de chaleur par radiateur est installée au moins d'un côté d'une partie supérieure ou inférieure de la serre;

le réservoir d'accumulation de chaleur (4) est disposé à la partie inférieure de la serre;

et la partie (4B ou 4D) d'échange de chaleur par radiateur et le réservoir (4C) d'accumulation de chaleur sont reliés l'un à l'autre par un système (4E, 4F) de circulation forcée de liquide

caractérisée par le fait que:

le réservoir (4C) d'accumulation de chaleur est un organe isolé pour la chaleur dans lequel sont incorporés des récipients cylindriques (409) contenant un fluide d'accumulation de chaleur par transformation de phase;

dans le réservoir (4C) un passage d'écoulement est formé;

un tuyau (412) de retour de captation de chaleur venant d'une partie (4B) de captation de chaleur par radiateur, est relié à une partie supérieure du côté amont dudit passage d'écoulement

un tuyau (413) d'alimentation destiné à la partie (4B) de captation de chaleur par radiateur est raccordé sur une partie basse du côté aval dudit passage d'écoulement;

le réservoir (4C) d'accumulation de chaleur est un prisme rectangulaire s'étendant dans le sens longitudinal;

l'intérieur du réservoir (4) est divisé en une pluralité de sections dans sa partie intermédiaire située sur ses grands côtés dans le sens horizontal, par une pluralité de plaques (405) de cloisonnement verticales.

les récipients cylindriques (409) sont disposés dans le sens des grands côtés du réservoir (4C), en s'étendant à travers les plaques (405) de cloisonnement, en couches horizontales, les récipients d'une couche quelconque étant disposés en quinconce par rapport aux récipients de la couche ou de chaque couche qui est au dessus et/ou au dessous de ladite couche;

les plaques (405) de cloisonnement sont divisées chacune en une partie supérieure et en une partie inférieure qui maintiennent entre elles les récipients cylindriques (409);

et les sections respectives du réservoir (4C) communiquent entre elles grâce à des tuyaux (410) de communication qui sont ouverts en direction des parties supérieures des sections du réservoir de la partie amont, à travers les cloisons (405) et qui sont également ouverts en direction des parties supérieures des sections du réservoir de la partie aval.

Fig.1

4B₁
4A
4D₂ 4P₂ 4B 4B₂ 4E
4D 4F 4C 4P₁

Fig.2 4D₁

412   410        410                           414a

414b                                            413

407

414   461 405 462 403                          4C

Fig. 3

Fig. 4